# EUROPÄISCHE PATENTANMELDUNG

(11) **EP 0 658 422 A1**
(43) Veröffentlichungstag der Anmeldung: **21.06.1995**
(21) Anmeldenummer: 94119752.7
(22) Anmeldetag: 14.12.1994
(51) Int. Cl.: B32B 27/34

(54) **Formteil mit resistenter Oberfläche**

(30) Priorität: 14.12.1993 DE 9319190 U
(71) Anmelder: EMS-INVENTA AG, CH-8001 Zürich (CH)
(72) Erfinder: Pfleger, Wolfgang, Dipl. Ing., CH-7015 Tamins (CH)
(74) Vertreter: Müller-Boré & Partner Patentanwälte

(57) **Zusammenfassung**

Die Erfindung betrifft Formteile mit einem tragenden Kernteil aus einem ersten thermoplastischen Polymeren und einer das Kernteil umgebenden Schutzschicht aus einem zweiten thermoplastischen Polymeren auf Basis von Polyamid 11, Polyamid 12 oder Polyamid 1212, wobei die Schutzschicht form- und verfahrensbedingt eine Dicke von 0,2 bis 5 mm und gezielte funktionelle Durchbrüche aufweisen kann.

## Beschreibung

Die Erfindung betrifft den in den Patentansprüchen angegebenen Gegenstand. Die Erfindung betrifft insbesondere Formteile mit resistenter Oberfläche aus einem Funktions- oder Kernteil und einer thermoplastischen Schutzschicht, die das Kernteil umgibt.

Die Formteile finden beispielsweise Verwendung als Rückspiegelgehäuse, Türgriffe, Profile, Abdeckleisten, Türbeschläge, Türabdeckungen.

Thermoplasten müssen in der Regel für Außenanwendungen gegen die Einflüsse von Licht, Luft, Sauerstoff und Witterungseinflüsse aufwendig stabilisiert werden. Satbilisatoren sollen thermische Schädigungen während der Verarbeitung und dem Gebrauch, Oxidation und Abbau durch Witterungseinflüsse, insbesondere UV-Einstrahlung verhüten. Für fast alle Kunststoffanwendungen braucht man chemisch vielfältig variierbare Stabilisatorsysteme, die in ihrer Zusammensetzung sowohl auf das verwendete Polymer als auch auf die jeweiligen Gebrauchsanforderungen abgestimmt sein müssen. Glasfaser-, glaskugel- und mineralgefüllte Thermoplaste werden von vorerwähnten Einflüssen vor allem in ihrer optischen Qualität stark beeinträchtigt. Damit erhält das gesamte, unter Umständen dickwandige Bauteil die teuren stabilisierenden Additive, obwohl die zerstörende Wirkung von UV-Strahlung, Sauerstoff und Wetter nur in eine Tiefe von < 300 µm reicht.

Aufgabe der Erfindung ist es daher Formteile bereitzustellen, die gegen Umwelt- und Witterungseinflüsse geschützt sind, ohne daß das Formteil in seiner gesamten Masse mit den notwendigen Additiven versehen wird. Diese Aufgabe wird durch die Formteile gemäß Anspruch 1 gelöst. Sie wird insbesondere durch Formteile gelöst, deren Resistenz gegen Umwelteinflüsse durch eine das Kernteil umgebende Schutzschicht bewirkt wird.

In den Unteransprüchen sind vorteilhafte Ausführungsformen der Erfindung enthalten.

Die erfindungsgemäßen Formteile zeigen folgende vorteilhafte Eigenschaften:
- ausgezeichnete Oberfläche wie bei Formteilen aus unverstärkten Materialien,
- Ausbildung der Schutzschicht auf beliebig geformten, dickwandigen, vor allem auf nicht ebenen Oberflächen,
- hoher Glanz bei Oberflächenstrukturen ohne störendes "Auskreiden" von Inhaltsstoffen,
- ausgezeichnete Abbildung von Erodierstrukturen,
- keine Unansehnlichkeit der Oberfläche nach Bewitterung (Grauschleier), die insbesondere bei glasfaserverstärkten und mineralgefüllten Produkten schon nach relativ kurzer Zeit auftritt,
- verbesserte Lebensdauer,
- hohe Chemikalienbeständigkeit,
- wesentlich reduzierter Verbrauch an Stabilisatorsystemen,
- Erhöhung des Nutzwertes des Bauteiles bei wenig gesteigerten Materialkosten,
- Kostenersparnis durch Wegfall des aufwendigen Handlings und der zum Teil umweltbelastenden Materialien zur Lackierung,
- Kostenersparnis durch Wegfall an Nachbearbeitung,
- keine Notwendigkeit für den Einsatz von höherwertigen, teureren Thermoplasten als Trägermaterial,
- sondern Möglichkeiten, qualitativ einfacheres Trägermaterial zu verwenden, das auch Recyclingmaterial enthalten kann.

Das Kernteil, das als das eigentliche Funktionsteil die notwendigen mechanischen Eigenschaften aufweist, besteht aus einem ersten thermoplastischen Polymer aus der Gruppe Polyamide, Polyester, Polyolefine, Polyacetale, Polycarbonate, Polyphthalamide und ihren Blends und kann ganz oder teilweise aus deren Recyclingprodukten bestehen. Es enthält bevorzugt Füllstoffe, Verstärkungsfasern, Pigmente und wahlweise Schlagzähmodifikatoren als verwendungsbedingte Additive. Ein erfindungsgemäßes Formteil behält seine hohe Steifigkeit auch bei hohen Temperaturen, wobei es das visuelle Erscheinungbild eines unverstärkten Materials zeigt.

Die Schutzschicht der erfindungsgemäßen Formteile besteht aus einem resistenten thermoplastischen zweiten Polymer, dessen Oberflächenresistenz durch das Polymer selbst und die stabilisierenden Additive gegeben ist. Diese Additive können handelsübliche Hitze-, Licht-, UV-, Hydrolyse- und Chemikalien-Stabilisatoren bzw. -stabilisatorsysteme sein.

Das hochwertige zweite Polymer, bevorzugt aus der Gruppe der Homo- oder Copolymeren von PA 11, PA 12, PA 1212, ihrer Blends untereinander oder mit anderen semikristallinen oder amorphen Homo- oder Copolyamiden kann die verwendungsbedingten Additive, wie Pigmente, Füllstoffe und Schlagzähmodifikatioren, Weichmacher und Stabilisatoren enthalten. Vorteilhafte Polymere sind Polyamid 11 oder Polyamid 12, die eine ausgezeichnete inhärente Stabilität gegen UV-Licht und Witterungseinflüsse aufweisen sowie teilkristalline, amorphe oder auch elastomere Copolymere dieser Polyamidtypen.

Als Schutzschicht auf unverstärkten oder verstärkten, gefüllten oder ungefüllten unstabilisierten Polymeren wie PA 6 oder PA 6.6 gewährleisten diese Polymere eine ausgezeichnete Schutzwirkung für das Funktions- oder Kernteil und sichern somit die mechanischen und örtlichen Eigenschaften des Formteils über lange Zeit.

Falls Schutzschicht und Kernteil ganz oder teilweise unverträglich sind, können sie haftungsvermittelnde Additive wie beispielsweise Polyolefine mit reaktiven Gruppen enthalten.

Als Anwendungen für die erfindungsgemäßen Form- oder Bauteile seien beispielhaft genannt: Rückspiegelgehäuse, Türgriffe, Profile, Rohre, Abdeckleisten, Türbeschläge und andere Formteile der Art, die gegen UV-Strahlen, oxidative und chemische Angriffe geschützt werden müssen, und die sich durch ihre Geometrie für das Mehrkomponentenspritzgießen eignen.

Die erfindungsgemäßen Formteile sind nach dem Mehrkomponenten-Spritzguß- oder Koinjections-Verfahren erhältlich und weisen eine geschlossene genügend dick ausgebildete Schutzschicht auf, die im Gegensatz zu Schutzfolien allseitig ausgebildet werden kann, während mit Schutzfolien nur jeweils eine Fläche des Formteils abgedeckt wird. Abhängig von der Form des Formteils und dem Spritzgußverfahren können minimale Schichtdicken um 0,2 mm und ohne weiteres auch solche von 5 mm erreicht werden.

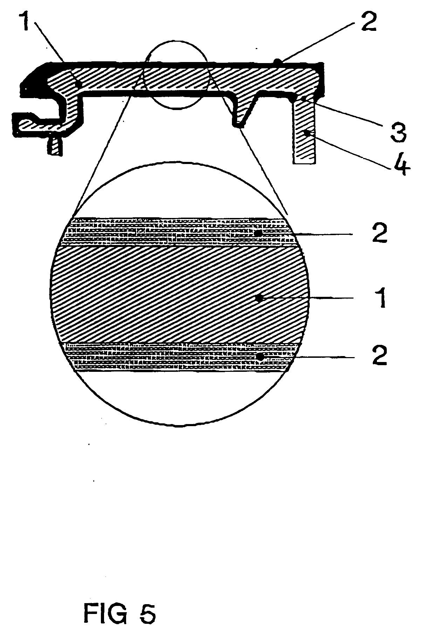

Dabei ist es besonders vorteilhaft, daß das Material des Kernteils gezielt an Stellen, die z.B. für die Funktion des Formteils besonderen Anforderungen genügen müssen, einen Durchbruch bilden kann, der bevorzugt im nicht sichtbaren Bereich des Formteils liegt. (Fig. 5)

Ein weiterer Vorteil liegt im ausgezeichneten Formschluß der auf PA 11, PA 12 oder PA 1212 basierenden Schutzschichten zum Kernteil, infolge des größeren Schwunds. Damit werden Verträglichmacher als Additive im ersten und/oder im zweiten Polymer bevorzugt nur dann notwendig, wenn es für den Wiedereinsatz der Formteile als Recyclingmaterialien vorteilhaft ist.

Besondere Ausführungsformen der erfindungsgemäßen Formteile bestehen aus einem Standard-Polymeren wie glasfaserverstärktem PA 6 oder PA 66 für das Kernteil und einem speziell kratzfest modifizierten Polymeren z.B. einem amorphen PA 12-Copolymer oder einem Polymeren mit sogenannten 'soft touch', z.B. einem PA 12-Elastomeren für die Schutzschicht.

Die nachfolgfolgenden Testresultate belegen die besondere Eignung von PA 12 als resistentes Schichtmaterial.

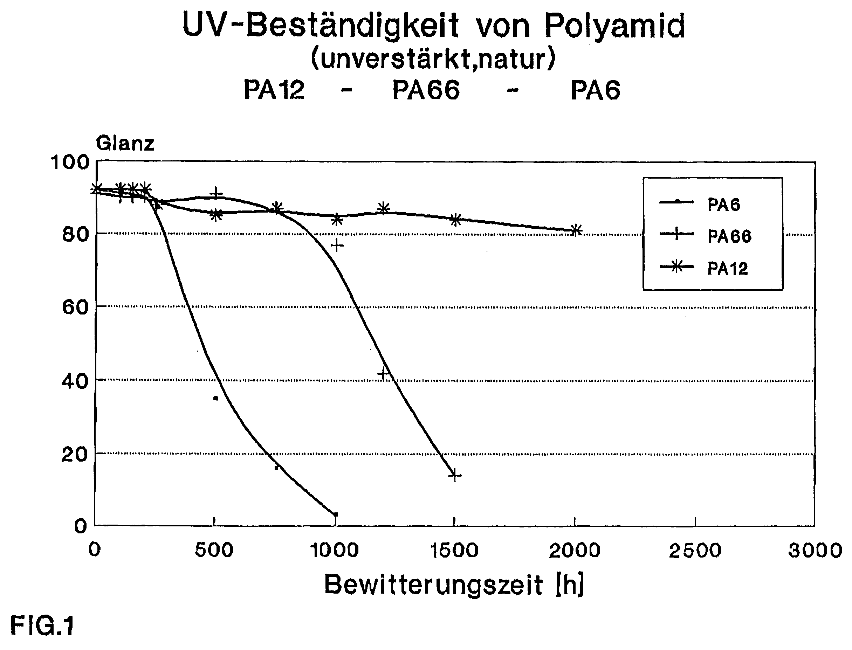

- **Figur 1:**: UV-Beständigkeit von unverstärktem PA 12 im Vergleich mit PA 66 und PA 6.

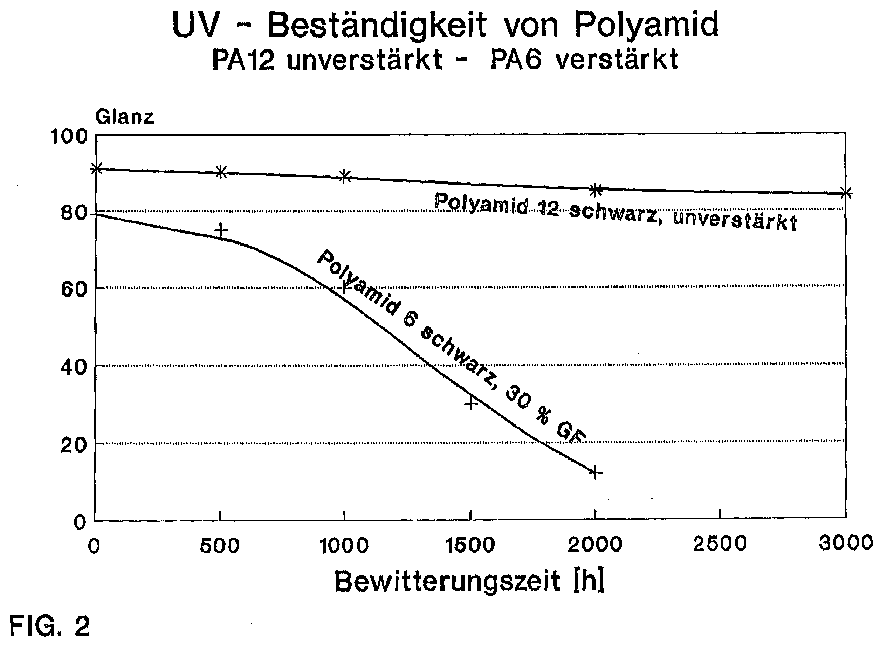

- **Figur 2:**: UV-Beständigkeit von PA 12, schwarz, unverstärkt mit PA 6, schwarz, glasfaserverstärkt.

### Meßkriterium:

Ganz gemessen im Winkel von 60 °. (Die reflektierte Lichtintensität eines unter dem Winkel von 60 ° auf die zu prüfende Oberfläche aufgestrahlten Lichtzählers wird gemessen und in Prozent zur eingestrahlten Lichtintensität angegeben.)

### Bewitterungsmethode:

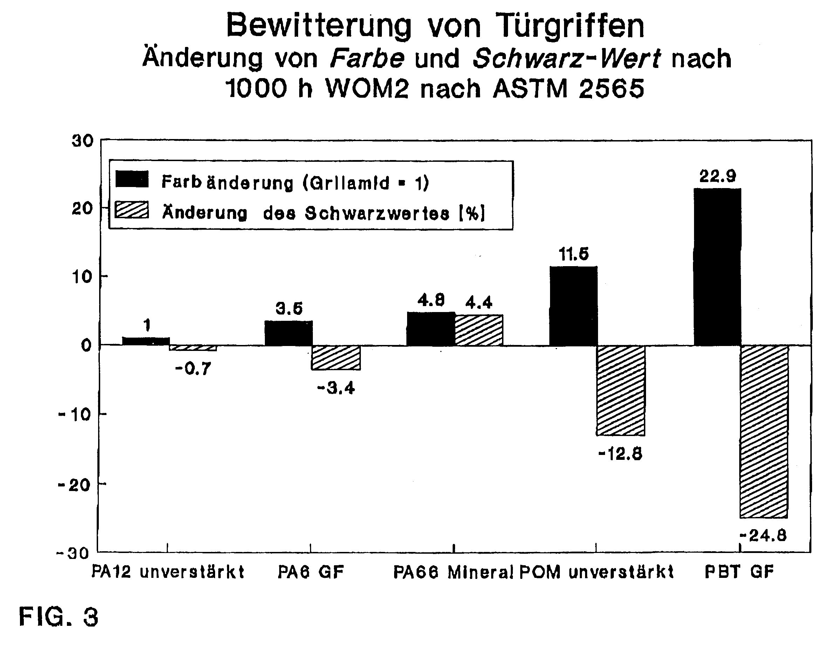

Schnellbewitterung mit Atlas WOMCi 35 nach ASTM D 2565 Methode A;
XENON Hochdruckstrahler Typ B;
Filter: Borosilikat (Spektrum D65)
Strahlung E: 0,35 W/m² bei 340 nm;
Schwarztafeltemperatur: 63 + /- 2 °C;
Luftfeuchte: 50 % rel.- Feuchte in der Trockenphase;
Beziehungszyklus: 102 min. trocken, 18 min. besprühen mit Weichwasser
- **Figur 3:**: Bewitterung von Türgriffen aus PA 12 mit anderen Polymermaterialien

### Meßmethode:

### Meßkriterium:

WOM 2 nach ASTM 2565
- Farbänderung:: ΔE D65
- Schwarzwert:: L* D65

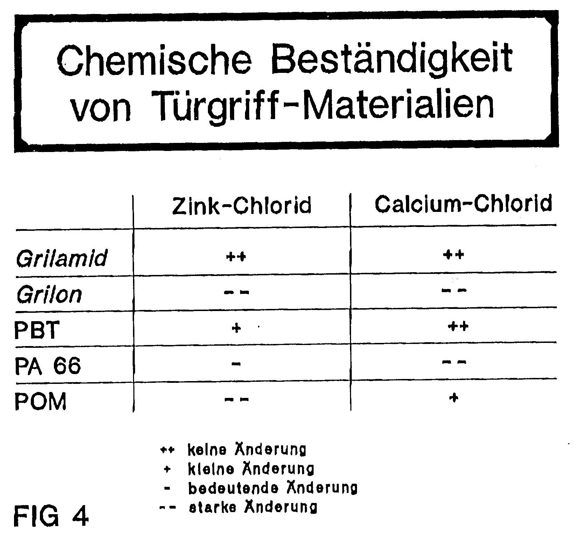

- **Figur 4:**: Chemische Beständigkeit von PA 12 als Türgriffmaterial gegenüber anderen Polymeren
- **Figur 5**: Türgriff im Längsschnitt und Querschnitt
(1) Kernteil mit
(3) Durchbruch des Kernmaterials
   am Befestigungszapfen (4)
(2) Schutzschicht

### Zinkchlorid-Test

- **Meßmethode:**: Die Prüfkörper werden für 200 Stunden in 50 % wäßrige ZnCℓ₂-Lösung gestellt, danach mit Leitungswasser abgespült und bei 100 °C getrocknet.

### Calciumchlorid-Test (Mercedes Benz)

- **Meßmethode:**: Eine Ethanol-Wasserlösung (1:1) wird mit Calciumchlorid gesättigt. Die Prüfkörper werden für 30 Minuten in den Bodensatz der Lösung gestellt, danach mit Leitungswasser abgespült und bei 100 °C getrocknet.

### Materialien:

- PA 12, unverstärkt, natur: Grilamid L20 G, (Ems-Chemie) gleitmittelhaltig
- PA 12, schwarz, unverstärkt: Grilamid L20 G, (Ems-Chemie) ruß- und gleitmittelhaltig
- PA 6, unverstärkt, natur: Grilon A 28 GM, (Ems-Chemie) gleitmittel- und nukleirungsmittelhaltig
- PA 6, schwarz, 30 % GF: Grilon PV-3H, (Ems-Chemie) ruß- und gleitmittelhaltig, licht- und hitzestabilisiert, 30 % Kurzglasfaser
- PA 66, unverstärkt, natur: Grilon T 300 GM, (Ems-Chemie) gleitmittel- und nukleierungsmittelhaltig, hitzestabilisiert
- PA 66, Mineral: Minlon 14 D1, (DuPont), mit 27 % Mineralstoffe, lichtstabilisiert, rußhaltig
- POM, unverstärkt: Delrin 9072 (DuPont)
- PBT, GF: Pocan 7331, (Bayer) rußhaltig, 30 % Kurzglasfaser

## Patentansprüche

1. Formteil mit einem tragenden Kernteil aus einem ersten thermoplastischen Polymeren und einer das Kernteil umgebenden Schutzschicht aus einem zweiten thermoplastischen Polymeren auf Basis von Polyamid 11, Polyamid 12 oder Polyamid 1212, wobei die Schutzschicht form- und verfahrensbedingt eine Dicke von 0,2 bis 5 mm und gezielte funktionelle Durchbrüche aufweisen kann.

2. Formteil gemäß Anspruch 1, dadurch gekennzeichnet, daß das erste Polymer ausgewählt ist aus der Gruppe Polyamid, Polyester, Polyolefin, Polyacetal, Polycarbonat, Polyphthalamid, ihrer Blends, ihrer Recyclingprodukte und Gemischen davon.

3. Formteil gemäß einem der vorhergehenden Ansprüche, dadurch gekennzeichnet, daß das erste Polymer verwendungsbedingte Additive wie Füllstoffe, Verstärkungsfasern, Pigmente und Schlagzähmodifikatoren enthält.

4. Formteil gemäß Anspruch 1, dadurch gekennzeichnet, daß das zweite Polymer ausgewählt ist aus der Gruppe der Homo- oder Copolymeren des PA 11, PA 1212, ihrer Blends untereinander und ihrer Blends mit anderen semikristallinen oder amorphen Homo- oder Copolyamiden.

5. Formteil gemäß Anspruch 4, dadurch gekennzeichnet, daß die Copolymeren teilkristalline, amorphe oder elastomere PA-Typen sind.

6. Formteil gemäß einem dere vorhergehenden Ansprüche, dadurch gekennzeichnet, daß das zweite Polymer mit verwendungsbedingten Additiven aus der Gruppe Stabilisatoren, Weichmacher, Schlagzähmodifikatoren, Pigmente modifiziert ist.

7. Formteil gemäß einem der vorhergehenden Ansprüche, dadurch gekennzeichnet, daß das erste und/oder das zweite Polymer verträglichmachende Additive enthält.

8. Formteil gemäß einem der vorhergehenden Ansprüche, dadurch gekennzeichnet, daß der Gewichtsanteil des zweiten thermoplastischen Polymers im Formteil zwischen 10 und 70 %, bevorzugt zwischen 25 und 50 % beträgt.

9. Formteil gemäß einem der vorhergehenden Ansprüche erhältlich nach dem Koinjectionsverfahren.

10. Formteil gemäß Anspruch 9, aus der Gruppe Rückspiegelgehäuse, Türgriffe, Türabdeckungen, Türbeschläge, Profile und Abdeckleisten.
